# EUROPEAN PATENT APPLICATION

(11) **EP 4 491 316 A1**
(43) Date of publication of application: **15.01.2025**
(21) Application number: 23185126.2
(22) Date of filing: 12.07.2023
(51) Int. Cl.: B23K 26/00, B23K 26/08, B23K 37/053, F16L 3/18, B23K 101/06

(54) **A CONTAINMENT SYSTEM FOR CONTAINING A TUBE ON A TUBE WORKING MACHINE AND A LASER TUBE WORKING MACHINE COMPRISING SAID CONTAINMENT SYSTEM**

(71) Applicant: Bystronic Laser AG, 3362 Niederönz (CH)
(72) Inventor: Fontana, Luca, Ospitaletto BS (IT); Delbarba, Renato, Provaglio d Iseo BS (IT)
(74) Representative: Perani & Partners S.p.A.

(57) **Abstract**

Containment system (1) for containing a tube (T), that extend along a longitudinal axis (X-X), on a tube working machine (100). The containment system (1) comprises lateral containment means (2) configured to contain the tube (T) along a first direction (Y-Y) transversal to the longitudinal axis (X-X) of the tube (T), and supporting means (3) configured to support the tube (T) along a second direction (Z-Z) transversal to both the first direction (Y-Y) and the longitudinal axis (X-X) of the tube (T). The lateral containment means (2) comprise a pair of containment bodies (20) configured to be arranged on opposite sides of the tube (T) along the first direction (Y-Y), wherein each containment body (20) is eccentrically rotatable around a respective rotation axis (A-A) to contact opposite lateral portions (TL) of the tube (T) and contain the tube (T) along the first direction (Y-Y).

## Description

### Technical field

The present invention relates to the field of equipment and components for containing a tube on a tube working machine.

In detail, the present invention relates to a containment system configured to support and laterally contain a tube on a tube working machine, in particular a laser tube cutting machine.

The present invention also relates to a laser cutting machine comprising such containment system.

### State of the art

Laser cutting is a well-known technology that uses a laser beam to melt and/or vaporize materials, resulting in a cut edge or an engraving.

This laser cutting technology has been combined with computer numerical control in CNC machines to automate the cutting operations of workpieces such as metal sheets or tubes.

The laser tube working machines comprise a working station where a laser is configured to perform cutting operations on a tube to be worked, a supporting system configured to vertically support the tube, and a moving mandrel configured to grip a tail end of the tube and feed the tube to the working station.

In detail, the known supporting systems are composed of several sub-systems arranged all along the machine basement. Each sub-system is equipped with a supporting element configured to engage a tube portion and apply a reaction force against gravity.

Some of the known supporting elements, such as those disclosed in EP3840915B1 and EP3292944B1, are also configured to laterally constrain the tube, i.e. provide a reaction force in a lateral direction transversal to the axis of the tube and the direction of gravity.

Specifically, EP3840915B1 discloses twin spiral supporting elements configured to jointly define a semicircular containment region adapt to receive a tube to be worked. The characteristic dimension (diameter/radius) of the semicircular containment region is adjusted to the tube size by rotating the spiral supporting elements about their respective rotation axis. When the tube to be worked is arranged between the twin spiral supporting element, it is both supported and laterally constrained by the central portion and side portions of the semicircular containment region, respectively.

EP3292944B1 discloses a supporting element mounted at a free end of a pivot arm and having a cavity for receiving a tube to be worked. The cavity has a cross-sectional profile shaped as an arc, the diameter of which depends on the angular position of the supporting element. By controlling the angular position of the support member about its axis of rotation, it is thus possible to set the profile of the cavity suitable for supporting the specific tube to be worked. Such a support member is not only able to adapt to the size of the tube to be worked but is also able to restrain the tube laterally.

As also indicated in paragraph [0003] of EP3292944B1, the known supporting element designed to restrain the tube laterally are suitable for use with light and flexible tubes (i.e. tubes with a small to medium cross-section) than for use with tubes that are heavy and large tubes (i.e. tubes with a significant cross-section). In fact, the variable semicircular containment region and cavity of the supporting elements described above are configured to receive a tube having cross section that can be inscribed within a circumference having a diameter smaller than a predetermined diameter.

Supporting systems equipped with roller-shaped supporting elements are also known in the state of the art. Such roller-shaped supporting elements are suitable for supporting tubes with large cross sections, but they cannot be used for supporting flexible tubes with small cross-sections, in particular open cross-sections, which have to be to be restrained laterally.

It is therefore clear that the known supporting systems have the disadvantage of limiting the range of tube sizes that can be worked by a laser cutting machine on which they are installed.

### Scope of the invention

In this context, one object of the present invention is to provide a containment system for containing a tube on a tube working machine, in particular a laser tube working machine, such as a laser tube cutting machine, which is able to operate with a wide range of tube sizes.

In particular, it is an object of the present invention to provide a containment system for containing both small/medium cross-section tubes that require lateral restraint and large cross-section tubes on a tube working machine.

It is also an object of the present invention to provide a laser tube working machine adapted to work a wide range of tube sizes.

### Summary of the invention

The containment system object of the present invention is configured to contain a tube, that extends along a longitudinal axis, on a tube working machine.

The containment system comprises lateral containment means configured to contain the tube along a first direction transverse to the longitudinal axis of the tube, and supporting means configured to support the tube along a second direction transverse to both the first direction and the longitudinal axis of the tube.

In detail, the lateral containment means comprise a pair of containment bodies configured to be arranged on opposite sides of the tube along the first direction. Such containment bodies are configured to be eccentrically rotatable around a respective rotation axis to contact with opposite lateral portions of the tube to contain it along the first direction.

In the containment system of the present invention, the tube support and lateral containment actions are provided by separate members (supporting and lateral containment members) and are therefore independently controllable, unlike in the supporting systems known from EP3840915B1 and EP3292944B1, where the support and lateral containment actions are coupled as provided by a single element.

The containment system according to the present invention allows to use the lateral containment means to provide lateral containment action only when necessary, i.e. when the tube cross-section sizes of the tube to be worked require it (small/medium cross-section tubes). On the contrary, if the tube to be worked does not require lateral containment (large cross-section tubes) the lateral containment means are not used and, therefore, do not limit the maximum cross-section size that can be worked by the tube working machine in which it is installed the containment system.

Therefore, advantageously, the present invention allows to provide a containment system for containing both small/medium cross-section tubes that require lateral restraint and large cross-section tubes on the same tube working machine.

Furthermore, the present invention advantageously allows to provide a laser tube working machine adapted to work a wide range of tube sizes.

According to one embodiment, when the tube is constrained by the containment system, the supporting means and the containment bodies are configured to be arranged on opposite sides of the tube along the second direction. Such arrangement allows to improve the degree of constraint of the tube and thus the working precision of the laser tube working machine on which the containment system is installed.

According to one embodiment, the supporting means comprise a supporting element configured to engage a first portion of the tube to support the tube along the second direction, while each containment body is configured to engage a second portion of the tube opposite to the first portion along the second direction. This mutual arrangement of the supporting element and containment bodies enables stable containment of the tube along the second direction to be achieved by restraining opposite portions of the tube.

According to one embodiment, the containment bodies define a semicircular shaped containment region configured to engage the tube. This shape allows the containment bodies to provide, in addition to the containment action along the first direction, a restraining action along the second direction. Therefore, the semicircular shaped containment region defined by the containment bodies allows to improve the level of containment of the tube and thus the working precision of the laser tube working machine on which the containment system is installed.

According to one embodiment, the containment bodies are configured to adjust the diameter of the semicircular shaped containment region upon rotation around the respective rotation axes so as to contain different tubes sizes. The diameter adjustment of the semicircular shaped containment region enables stable and accurate containment of tubes having different cross-section.

According to one embodiment, the containment bodies are parallel to the second direction. This allows the angular position of the containment bodies about the respective rotation axes to be easily and accurately controlled.

According to one embodiment, the lateral containment means comprise two or more pairs of containment bodies configured to engage different sections of the tube along the longitudinal axis of the tube. This allows to improve tube alignment by preventing the rotation or deflection of the tube along a direction transverse to its longitudinal axis.

According to one embodiment, the lateral containment means comprise a frame having a crossbar on which the containment bodies are rotatably mounted facing the supporting members. The crossbar is movable along the second direction from and towards the supporting means between a lateral containment configuration and a parking configuration. In the lateral containment configuration, the crossbar is arranged proximate to the supporting means along the second direction to let the containment bodies to engage and contain the tube along the first direction. In the parking configuration, the crossbar is spaced apart from the supporting means along the second direction to let the tube free along the first direction. The frame having a crossbar movable from and towards the supporting means allows easy switching between the lateral containment configuration in which the containment system is configured to contain small/medium cross-sectioned tube on the tube working machine, and the parking configuration in which the containment system is configured to contain big cross-sectioned tube on the tube working machine.

According to one embodiment, the supporting means are configured to move the supporting element along the second direction into one or more, preferably two or more, supporting positions. This allows to actively support the tube, i.e. to keep a not circular cross-shaped tube at a constant heigh when rotated around its rotated around its longitudinal axis.

According to one embodiment, the supporting means define a semicircular shaped supporting region which, together with the semicircular shaped containment region defined by the containment bodies, forms a circular shaped containment region. This ensures total containment of the tube along the first and second directions.

According to one embodiment, the supporting means comprise a pair of supporting elements, preferably two pairs of supporting elements, configured to be arranged on opposite sides of the tube along the first direction. Each supporting element of the pair of supporting elements is opposite to a respective containment body along the second direction. Such arrangement allows to improve the degree of restraint of the tube and thus the working precision of the laser tube working machine on which the containment system is installed.

The present invention further relates to a laser tube working machine which comprises a laser working station comprising a laser head configured to work a tube, a tube-carrying carriage configured to feed the tube to the laser working station along a feeding direction, and the above-mentioned containment system arranged between the laser working station and the tube carrying carriage.

Advantageously, the containment system enables the laser tube working machine to work a wide range of tube sizes, ranging from small/medium cross-section tubes that require to be laterally constrain to large cross-section tubes.

According to one embodiment, at least one lateral containment member of the containment system is in close proximity to the laser working station. Such arrangements minimize the distance between the laterally contained portion of the tube and the laser cutting head, thereby improving the working accuracy of the laser tube working machine.

According to one embodiment, the containment system of the laser tube cutting machine comprises two or more lateral members arranged between the laser working station and the tube carrying carriage along the feeding direction F-F. The plurality of containment systems allows to improve the tube alignment along the tube feeding direction and thus the laser tube working machine precision.

### BRIEF DESCRIPTION OF THE DRAWINGS

Further characteristics and advantages of the present invention will appear more clearly from the indicative, and therefore non-limiting, description of a preferred but not exclusive embodiment of the containment system and the laser tube working machine as illustrated in the enclosed drawings in which:
- Figure 1 shows a front view of a containment system according to a first embodiment of the present invention;
- Figure 2 shows a front view of a containment system according to a second embodiment of the present invention;
- Figure 3 shows some components of the containment system of Figures 1 and 2 that restraints a tube with a circular cross-section;
- Figure 4a and 4b shows some components of the containment system of Figures 1 and 2 that restraints a tube with a square cross-section with a first and second orientation, respectively;
- Figure 5 shows a side view of the lateral containment system of Figure 1;
- Figure 6 shows a bottom view of some components of the containment system of Figures 1 and 2 that restraints a tube with a circular cross-section;
- Figure 7 shows a perspective view of the components of Figure 6;
- Figure 8a shows a perspective view a laser tube working machine according to one embodiment of the present invention;
- Figure 8b shows a perspective view of some components of the laser tube working machine of Figure 8a;
- Figure 9 shows a side view of some components of the laser tube working machine of Figure 8a.

### DETAILED DESCRIPTION

The present invention relates to a containment system 1 for containing a tube T on a tube working machine 100, in particular on a laser tube working machine such as a laser tube cutting machine.

In the context of the present invention, the term "tube" is used to indicate an elongated structure extending along a tube longitudinal axis X-X between opposite ends. It is worth specifying that the term "tube" is not limited to pipes - i.e. rounded tube - but it also refers to any elongated structure with, for example, rectangular, squared or oval hollow cross section as well as to profiles with open cross-sections such as C-, U-, V-, X-, T-, H- or cross-shaped profiles.

Moreover, it should be specified that, in the context of the present invention, the term "size" refers to the size of the cross-section of the tube that is defined by a characteristic dimension. For round tubes (pipes) the characteristic dimension is the diameter of the tube, while for other type of tubes (e.g. rectangular, squared, C-, U-, V-, X-, T, H- or cross-shaped profiles.) the characteristic dimension is the diameter of the circumference that inscribe the cross-section of the tube.

Tubes can be classified as small, medium, large (big) according to the characteristic dimension. Typically, the characteristic dimension of small tubes is between 9 mm and 30 mm, of medium tubes is between 31 mm and 130 mm, and of large tubes is between 130 mm and 324 mm.

Small and medium tubes have sections a with a low moment of inertia and are therefore known to be prone to bending. For this reason, in order to be accurately worked on a tube working machine, they must be laterally restrained, i.e. constrained in a lateral direction transverse to, in particular perpendicular to, the longitudinal axis X-X of the tube and the direction of gravity.

Large (big) tubes, unlike small and medium tubes, have sections with high moments of inertia that give them high bending stiffness. For this reason, large tubes can be precisely worked without the need for lateral containment.

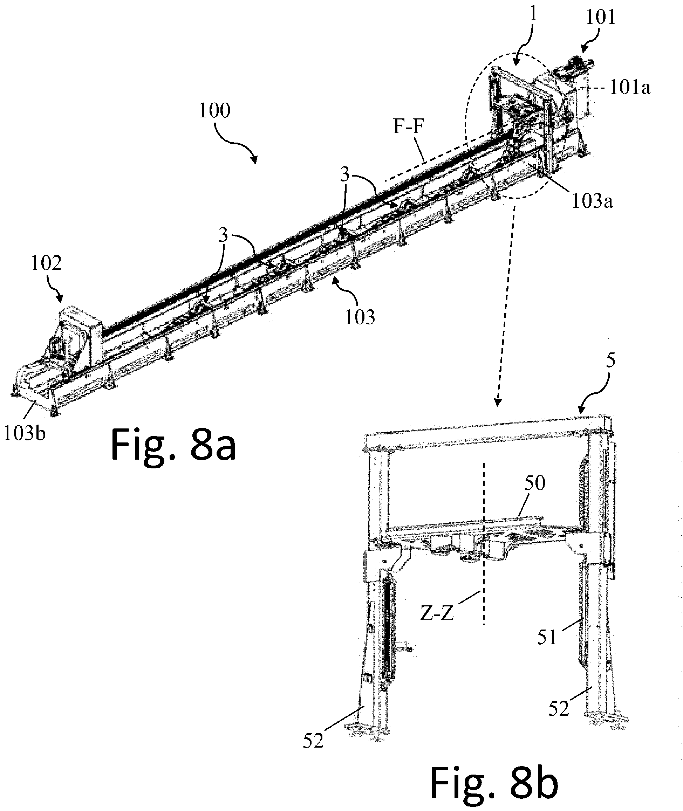

The containment system 1 according to the present invention is used to support and, if necessary, laterally restrain the tube T to be worked when is fed to a laser working station 101 of the laser tube working machine 100 along a feeding direction F-F (see e.g. Fig. 8a).

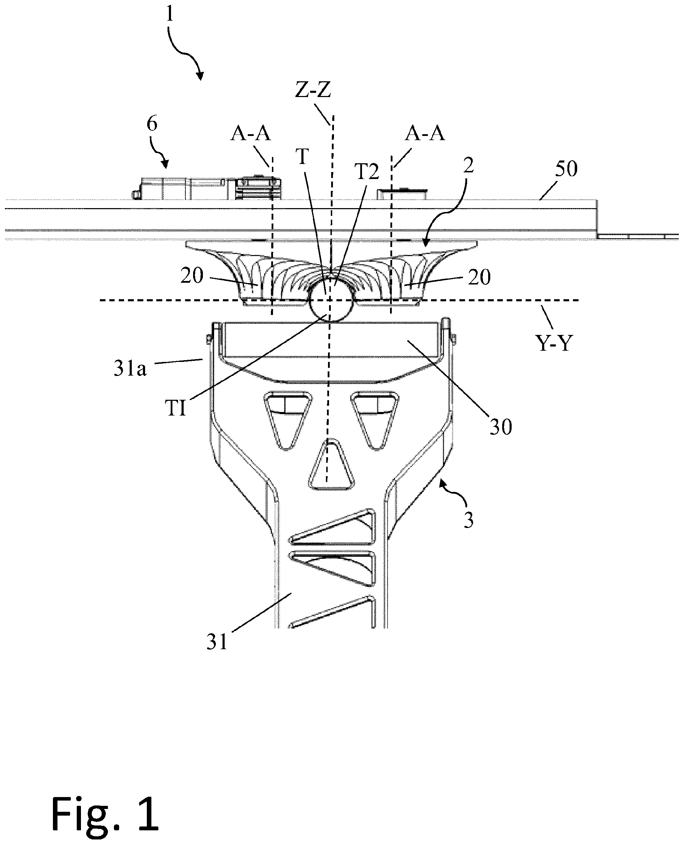

Referring to figures 1-3, 4a and 4b, the containment system 1 comprises lateral containment means 2 configured to contain the tube T along a first direction Y-Y.

The first direction Y-Y is transversal to the longitudinal axis X-X of the tube T and extends between opposite lateral portions TL of the tube T.

Preferably, the first direction is perpendicular to the longitudinal axis X-X of the tube T.

Furthermore, the first direction Y-Y is preferably transversal, in particular perpendicular, to the direction of action of the force of gravity.

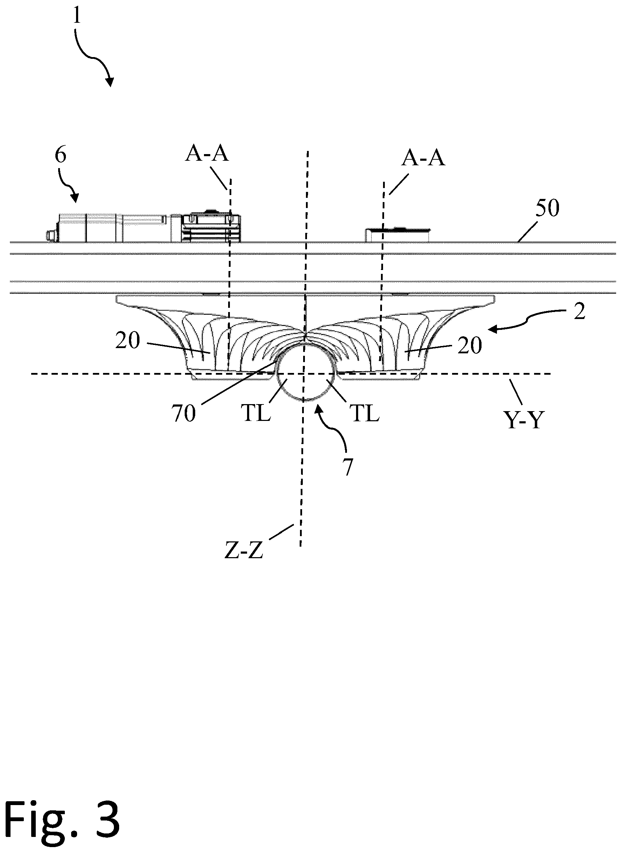

As shown in figure 3, the lateral containment means 2 comprise a pair of containment bodies 20 configured to be arranged on opposite sides of the tube T along the first direction Y-Y.

The containment bodies 20 are preferably symmetric and arranged side-by-side along the first direction Y-Y forming between them a gap 7 configured to receive the tube T to be laterally contained.

In the embodiments shown in the attached figures, the containment bodies 20 are symmetric with regard to a vertical plane VP through the longitudinal axis X-X of the tube T.

Each containment body 20 is eccentrically rotatable around a respective rotation axis A-A to contact the opposite lateral portion TL of the tube T and contain the tube T along the first direction Y-Y. In other words, by rotating around the respective rotation axis A-A, the containment bodies 20 vary the extension of the gap 7 along the longitudinal direction Y-Y to adapt it to the characteristic dimension of the tube T.

Preferably, the rotation axis A-A of the containment bodies 20 are parallel.

Furthermore, the rotation axis A-A of the containment bodies 20 are preferably transversal to the first direction Y-Y and, when the tube T is laterally restrained by the containment bodies 20, the rotation axis A-A are also transversal to the longitudinal axis X-X of the tube T.

The rotation of the containment bodies 20 around the respective rotation axis A-A can be, for example, actuated by one or more servomotors 6.

Kinematic means (e.g. transmission belt, gearbox), actuated by the one or more servomotors 6 and connected to the containment bodies 20, can be used to mechanically synchronize the rotation of the containment bodies 20 around their respective rotation axis A-A.

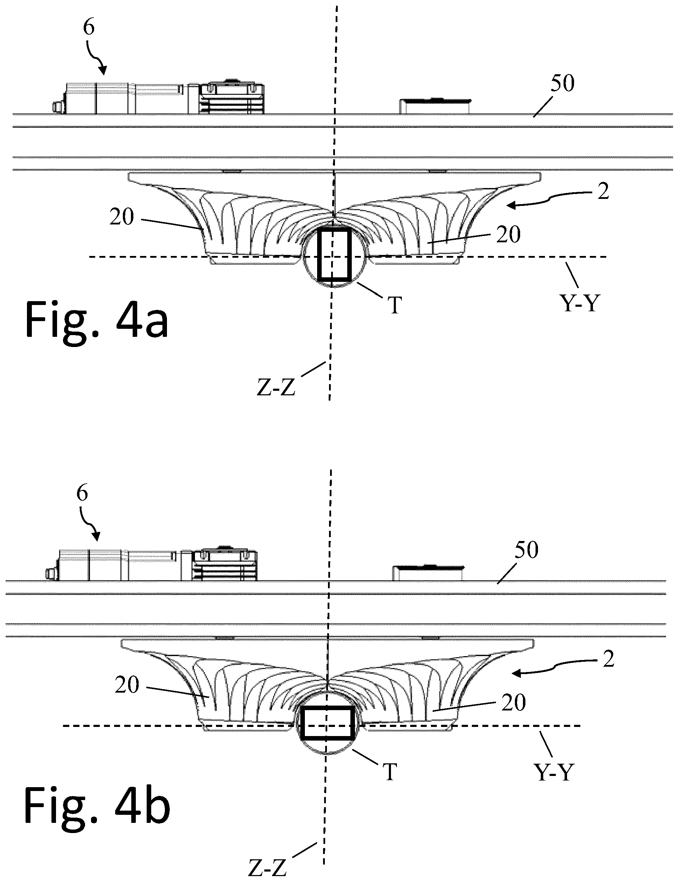

According to the embodiment of figures 3, 4a and 4b, the containment bodies 20 define a semicircular shaped containment region 70, whose diameter determines the characteristic dimension of the tube T which can be laterally constrained.

In alternative embodiments, the containment region defined by the containment bodies 20 may be an arc-shaped containment region having an angle at the center of between 90° and 180°.

Preferably, the containment bodies 20 are configured to adjust the diameter of the semicircular (or arc-shaped) containment region 70 upon rotation around the respective rotation axes A-A so as to restrain tubes T at least along the first direction Y-Y.

In a preferred embodiment, each containment body 20 has a quadrant shaped containment surface eccentric with respect to the relative rotation axis A-A.

According to one aspect, the quadrant shaped containment surface comprises a spiral profile in form of a logarithmic spiral, preferably comprising an angle between 7° and 27° degrees, preferably 17° to the rotation axis A-A. The logarithmic spiral, by virtue of its geometrical proprieties, provides a constant angle of contact between the containment bodies 20 and the tube T. The constant contact angle improves the lateral restraint of the tube T.

For example, the quadrant shaped containment surface comprises a spiral profile in particular in the form of an Archimedean spiral or a hyperbolic spiral or according to one of the spiral laws of Comu, Clotois, Fermat or Lituo. These further spiral shapes also provide continuous surfaces and thus good contact between the containment bodies 20 and the tube T. Further, spiral shapes like spiral shaped curves or other forms may be adapted according to specific diameters or contours of the tube.

The quadrant shaped support surface may comprise a profile having circular or spiral segments. In this case, the support surface may be discontinuous due to transitions between the segments.

Preferably, the spiral profiles of the containment bodies 20 of a pair of containment bodies 20 are symmetrical with respect to the vertical plane VP.

With reference to figures 1-3, 4a and 4b, the semicircular (or arc-shaped) containment region 70 allows, in addition to restraining the tube T along the first direction Y-Y, to constrain the tube T along a second direction Z-Z transversal, in particular perpendicular, to the first direction Y-Y.

When the tube T is laterally restrained by the containment bodies 20, the longitudinal axis X-X, the first direction Y-Y, and the second direction Z-Z are preferably perpendicular to each other.

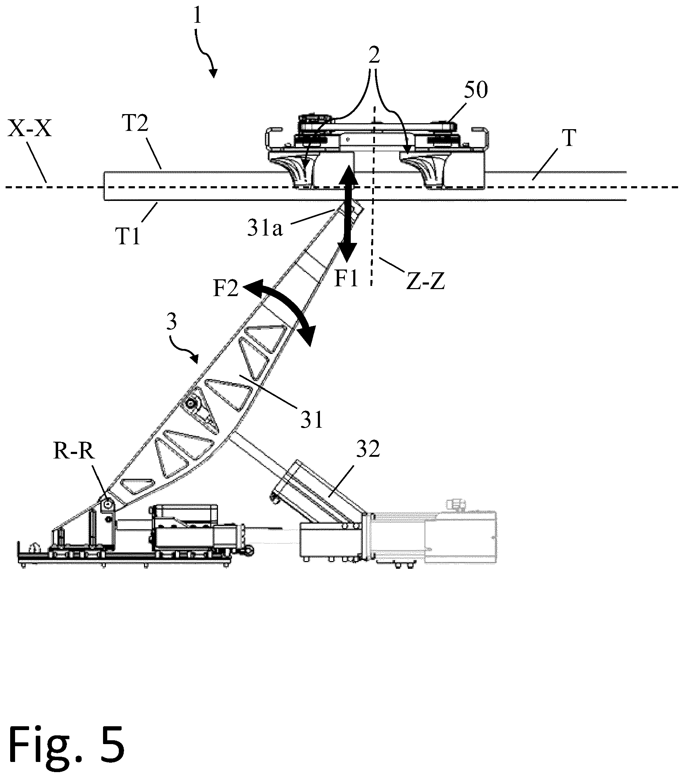

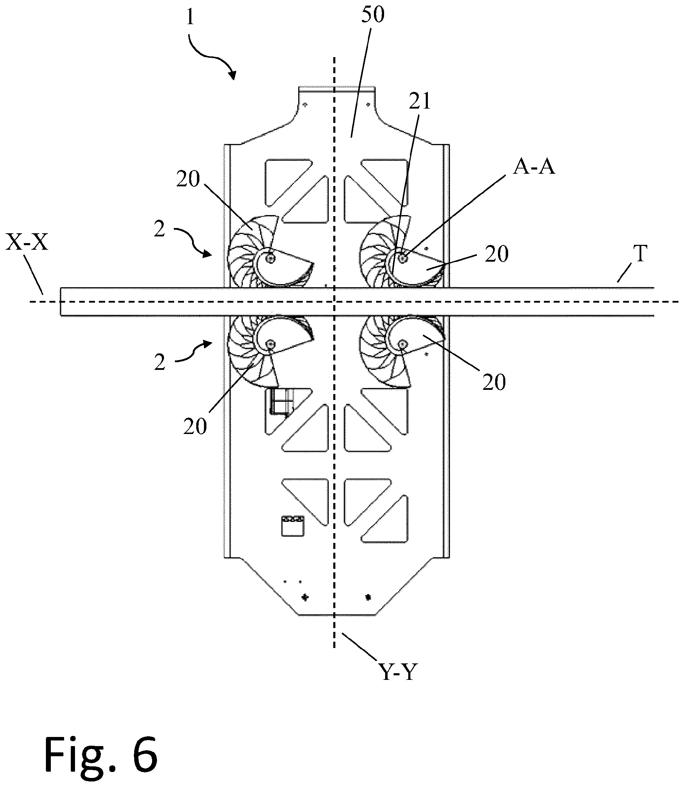

In order to improve alignment of longitudinal axis X-X of the tube T along the feeding direction F-F, the lateral containment means 2 may comprise two or more pairs of containment bodies 20 configured to engage different sections of the tube T along the longitudinal axis X-X. In particular, as shown in figures 5 and 6, each pair of containment bodies 20 is spaced from the other pairs along the feeding direction F-F.

The containment system 1 further comprises supporting means 3 configured to support the tube T along the second direction Z-Z.

Preferably, the second direction Z-Z corresponds to the direction of gravity and, therefore, the supporting means 3 are configured to support the tube against gravity.

With reference to the embodiments of figures 1, 2 and 5, when the tube T is contained by the containment system 1, the supporting means 3 and the containment bodies 20 are configured to be arranged on opposite sides of the tube T along the second direction Z-Z.

According to one aspect, the supporting means 3 comprise a supporting element 30 configured to engage with a first portion T1 of the tube T to support the tube T along the second direction Z-Z, while each containment body 20 is configured to engage with a second portion T2 of the tube T, opposite to the fist portion T1 along the second direction Z-Z.

Preferably, the first and second portions T1, T2 correspond to a lower and an upper portion of the tube T, respectively. Therefore, in this case, the containment bodies 20 are configured to engage with opposite upper-side portions, for example, along the above-described semicircular (or arc-shaped) containment region 70.

According to one embodiment, the supporting means 3 are configured to move the supporting element 30 along the second direction Z-Z in one or more, preferably two or more, supporting positions. This allows to keep the longitudinal axis A-A of tubes T with non-circular cross-section at a constant supporting height when rotated around their longitudinal A-A by the laser tube working machine 100 (active tube support).

In the embodiment of figure 5, the supporting means 3 comprises a pivot arm 31 on which the supporting element 30 is mounted at a free-end portion 31a. As shown by arrows F1 and F2 in figure 5, the pivot arm 31 is configured to pivot around an arm pivoting axis R-R to move the supporting element 30 along the second direction Z-Z in the one or more supporting positions.

The rotation of the pivot arm 31 is actuated by known actuating means 32, such as hydraulic or pneumatic pistons or electric motors.

In a first embodiment shown in figure 1 and 5, the supporting element 30 is a roller mounted in the idle state on the free-end portion 31a of the pivot arm 31.

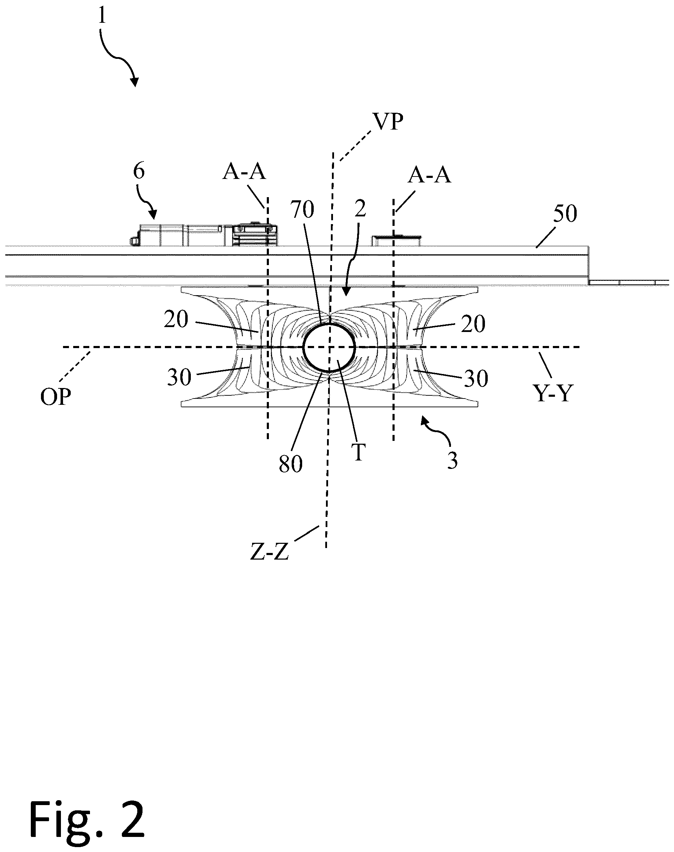

In a second embodiment shown in figure 2, the supporting means 3 define a semicircular shaped supporting region 80 which forms with the semicircular shaped containment region 70 a circular shaped containment region.

It should be noted that, when the tube T contained in the circular shaped containment region, the diameter of the semicircular shaped supporting region 80 is equal to the that of the semicircular shaped containment region 70.

Preferably, the supporting means 3 comprise a pair of supporting elements 30, preferably two or more pairs of supporting elements 30, configured to be arranged on opposite sides of the tube T along the first direction Y-Y.

Preferably, the supporting elements 30 of a pair of supporting elements 30 are symmetric with regard to the vertical plane VP.

Each supporting element 30 of the pair of supporting elements is opposite to a respective containment body 20 along the second direction Z-Z. Each supporting element 30 is therefore associated with a respective containment body 20.

According to an aspect shown in the embodiment of figure 2, the pair of supporting elements 30 is symmetrical with regard to the respective pair of containment bodies 20 along a horizontal plane OP through the longitudinal axis X-X of the tube T.

In the embodiment of figure 2, the pairs of supporting elements 30 define the semicircular shaped supporting region 80 and are configured to adjust the diameter of the semicircular supporting region 80 upon rotation around the rotation axes A-A of the containment body 20 with which they are associated so as to restrain tubes T at least along the first direction Y-Y.

In the embodiment of figure 2, each pair of supporting elements 30 is configured to support the tube T along the second direction Z-Z and to laterally constrain the tube T along the first direction X-X. Therefore, the supporting element 30 are configured to engage with opposite lower-side portions of the tube T.

Always with reference to the embodiment of figure 2, each supporting elements 30 has a quadrant shaped supporting surface eccentric with respecting to the rotation axis A-A.

What has been stated above with respect to the quadrant shaped containment surface also applies to the quadrant shaped supporting surface, *mutatis mutandis.* Therefore, the quadrant shaped supporting surface will not be described further.

Preferably, the quadrant shaped supporting surfaces of the supporting elements 30 of each pair of supporting elements 30 are symmetrical with respect to the vertical plane VP.

Furthermore, preferably, the quadrant shaped supporting surface of the pair of supporting elements 30 is symmetrical to the quadrant shaped containment surface of the respective pair of containment body 20 with respect to the horizontal plane OP.

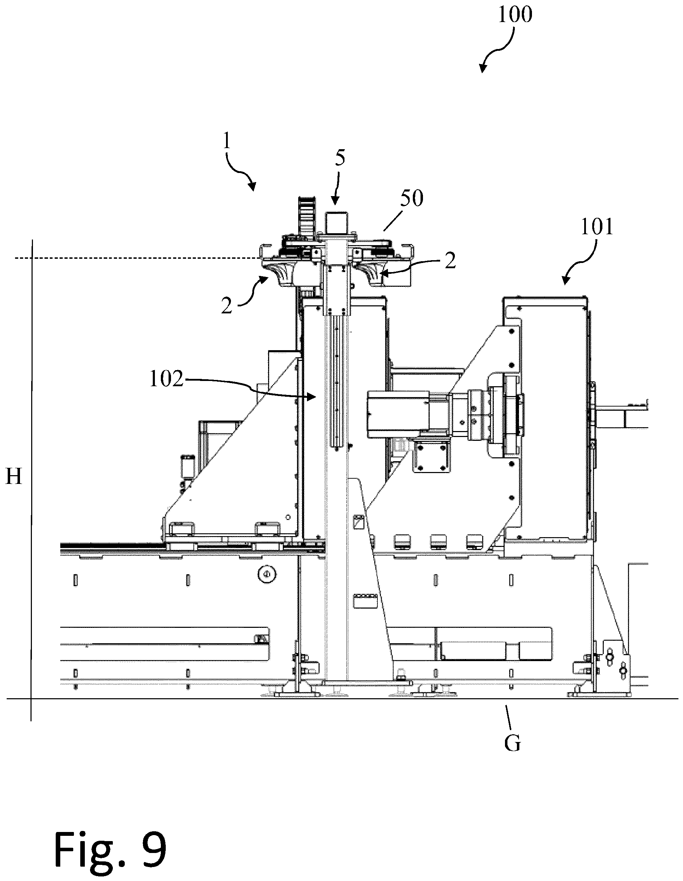

According to an aspect shown in the embodiment of figures 8a, 8b and 9, the containment system 1 comprises a frame 5 having a crossbar 50 movable from and towards the supporting means 3 along the second direction Z-Z.

As shown in figures 1, 2 and 7, the containment bodies 20 are rotatably mounted around the respective rotation axis A-A on the crossbar 50; therefore, the crossbar 50 moving along the second direction Z-Z carries the containment bodies 20 from and toward the supporting means 3.

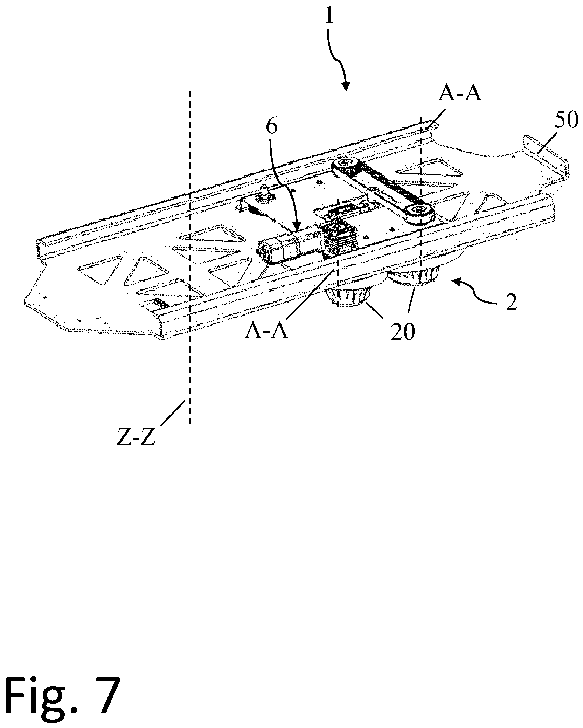

Always with reference to figure 7, preferably, two pairs of containment bodies 20 configured to engage different sections of the tube T along the longitudinal axis X-X are rotatably mounted on the crossbar 50.

Moving along the second direction Z-Z, the crossbar 50 switches between a lateral containment configuration and a parking configuration.

In the lateral containment configuration, the crossbar 50 is arranged proximate to the supporting means 3 along the second direction Z-Z so that the containment bodies contain 20 can contain the tube T at least along the first direction Y-Y. In other words, in the lateral containment configuration, the mutual position of the crossbar 50 with respect to the supporting member 3 is such that the containment bodies 20 can engage the tube T and constrain it as described above (figure 5).

In the parking configuration, the crossbar 50 is spaced apart from the supporting means 3 along the second direction Z-Z to leave the tube T free along the first direction Y-Y. In other words, in the parking configuration, the mutual position of the crossbar 50 with respect to the supporting member 3 is such that the containment bodies 20 are disengaged from the tube T.

With reference to figure 9, it should be noted that the parking heigh H - i.e., the distance of the crossbar 50 from a ground surface G on which the frame 5 and/or the laser cutting machine 100 on which is mounted lies - is defined in such a way that a tube-carrying carriage 102, configured to feed the tube T to the laser working station 101 along a feeding direction F-F, can pass below the crossbar 50 along the second direction Z-Z.

In use, when the tube T characteristic dimension is bigger than the maximum diameter that can be constrained by the containment means 2, the crossbar 50 is moved to the parking position. In this way, the tube T is supported vertically supported by the supporting means 3 but not constrained laterally by the containment means 2.

On the contrary, when the characteristic dimension of the tube falls within the range of tube sizes that can be constrained by the containment bodies 20, the crossbar is moved in the working configuration.

According one aspect, the containment bodies 20 are configured to constrain small and medium sized tubes T; therefore, the crossbar 50 is moved into the parking configuration when the tube T to be worked falls within the above-mentioned large (big) tubes and into the lateral containment configuration when the tube to be worked is small/medium-sized.

Preferably, the frame 5 comprises linear actuators 51, such as pneumatic cylinders, configured to move the crossbars 50 along the second direction Y-Y between the lateral containment and parking configurations.

Furthermore, the frame 5 preferably comprise one or more uprights 51 extending along the second direction Z-Z and on which the crossbar 50 is slidably mounted along the second direction Z-Z, for example by means of known guiding means (not shown). In the embodiment of figure 8b, the frame 5 is C-shaped and is configured to be attached to the ground surface G.

It is also object of the present invention a laser tube working machine 100 - such as, for example, a laser tube cutting machine - configured to work a wide range of tube sizes ranging from small to large (big).

With reference to figure 8a, the laser tube working machine 100 comprises: a laser working station 101 having a laser working head 101a configured to work (e.g. cut or engrave) a tube T, a tube-carrying carriage 102 configured to feed the tube T to the laser working station 101 along a feeding direction F-F, and the above-described containment system 1 arranged between the laser working station 101 and the tube-carrying carriage 102.

Preferably, the laser tube working machine 100 comprises a basement 103 extending along the feeding direction F-F between a first end portion 103a arranged in proximity to the laser working station 101 and a second end portion 103b opposite to the first end portion 103a.

In the embodiment of figure 8a, the tube-carrying carriage 102 is slidably mounted on the basement 103 along the feeding direction F-F between the first and second end portions 101a, 101b.

Furthermore, in the embodiment of figure 8a, the containment system 1 comprises a plurality of supporting means 3 successively mounted on the basement 103 along the feeding direction F-F between the first and second end portion 103a, 103b, and at least one lateral containment member 2 arranged between the first and second end portion 103a, 103b.

In detail, preferably, at least one lateral containment means 2 of containment system 1 is in close proximity to the laser working station 101.

According one embodiment, the lateral containment means 2 are arranged no more than 2500, preferably 1200, from the laser cutting head 101a along the feeding direction F-F.

In a not shown embodiment, the containment system 1 of the laser tube cutting machine 100 comprise two or more lateral containment means 2 arranged between the laser working station 101 and the tube carrying carriage 102 along the feeding direction F-F.

Those skilled in the art will obviously appreciate that several changes and variants may be made to the arrangements as described hereinbefore to meet incidental and specific needs. All these variants and changes fall within the scope of the invention, as defined in the following claims.

## Claims

1. A containment system (1) for containing a tube (T) on a tube working machine (100), the tube (T) extending along a longitudinal axis (X-X), the containment system (1) comprising:
- lateral containment means (2) configured to contain the tube (T) along a first direction (Y-Y), the first direction (Y-Y) being transversal to the longitudinal axis (X-X) of the tube (T),
- supporting means (3) configured to support the tube (T) along a second direction (Z-Z), the second direction (Z-Z) being transversal to the first direction (Y-Y) and the longitudinal axis (X-X) of the tube (T),
wherein:
- the lateral containment means (2) comprise a pair of containment bodies (20) configured to be arranged on opposite sides of the tube (T) along the first direction (Y-Y), each containment body (20) being eccentrically rotatable around a respective rotation axis (A-A) to contact opposite lateral portions (TL) of the tube (T) and contain the tube (T) along the first direction (Y-Y).

2. The containment system (1) according to claim 1, wherein the supporting means (3) and the containment bodies (20) are configured to be arranged on opposite sides of the tube (T) along the second direction (Z-Z) when the tube (T) is contained by the containment system (1).

3. The containment system (1) according to claim 1 or 2, wherein:
- the supporting means (3) comprise a supporting element (30) configured to engage with a first portion (TI) of the tube (T) to support the tube (T) along the second direction (Z-Z),
- each containment body (20) is configured to engage with a second portion (T2) of the tube (T), the second portion (T2) being opposite to the first portion (T1) along the second direction (Z-Z).

4. The containment system (1) according to any claims from 1 to 3, wherein the containment bodies (20) define a semicircular shaped containment region (70) configured to engage with the tube (T).

5. The containment system (1) according to claim 4, wherein the containment bodies (20) are configured to adjust the diameter of the semicircular shaped containment region (70) upon rotation around the respective rotation axes (A-A) so as to restrain different tubes (T) at least along the first direction (Y-Y).

6. The containment system (1) according to any claims 1 to 5, wherein each containment body (20) has a spiral profile (21) eccentric with respect to the respective rotation axis (A-A).

7. The containment system (1) according to any claims 1 to 6, wherein the rotation axes (A-A) of the containment bodies (20) are parallel to the second direction (Z-Z).

8. The containment system (1) according to any claims 1 to 7, wherein the lateral containment means (2) comprise two or more pairs of containment bodies (20) configured to engage different sections of the tube (T) along the tube longitudinal axis (X-X).

9. The containment system (1) according to any claims 1 to 8, wherein:
- the lateral containment means (2) comprise a frame (5) having a crossbar (50) movable along the second direction (Z-Z) from and toward the supporting means (3) between a lateral containment configuration and a parking configuration, the containment bodies (20) being rotatably mounted on the crossbar (50) around the respective rotation axis (A-A) and facing the supporting means (3),
- in the lateral containment configuration, the crossbar (50) is arranged proximate to the supporting means (3) along the second direction (Z-Z) to let the containment bodies (20) contain the tube (T) along the first direction (Y-Y),
- in the parking configuration, the crossbar (50) is spaced apart from the supporting means (3) along the second direction (Z-Z) to let the tube (T) free along the first direction (Y-Y).

10. The containment system (1) according to any claims 3 to 9, wherein the supporting means (3) are configured to move the supporting element (30) along the second direction (Z-Z) in one or more, preferably two or more, supporting positions.

11. The containment system (1) according to any claims 4 to 10, wherein the supporting means (3) define a semicircular shaped supporting region (80), the semicircular shaped supporting region (80) forms with the semicircular shaped containment region (70) a circular shaped containment region.

12. The containment system (1) according to any claims 1 to 11, wherein the supporting means (3) comprise a pair of supporting elements (30), preferably two pairs of supporting elements, configured to be arranged on opposite sides of the tube (T) along the first direction (Y-Y), each supporting element (30) of the pair of supporting elements (30) being opposite to a respective containment body (20) along the second direction (Z-Z).

13. A laser tube working machine (100) comprising:
- a laser working station (101) comprising a laser working head (101a) configured to work a tube (T),
- a tube-carrying carriage (102) configured to feed the tube (T) to the laser working station (101) along a feeding direction (F-F),
- a containment system (1) according to any claims 1 to 12, arranged between the laser working station (101) and the tube-carrying carriage (102).

14. The laser tube working machine (100) according to claim 13, wherein at least one lateral containment member (2) of containment system (1) is in close proximity to the laser working station (101).

15. The laser tube working machine (100) according to claim 13 or 14, wherein the containment system (1) comprises two or more lateral members (2) arranged between the laser working station (101) and the tube carrying carriage (102) along the feeding direction (F-F).
